# EUROPÄISCHE PATENTSCHRIFT

(11) **EP 2 929 155 B1**
(45) Veröffentlichungstag und Bekanntmachung des Hinweises auf die Patenterteilung: **28.02.2018**
(21) Anmeldenummer: 13794836.0
(22) Anmeldetag: 08.11.2013
(51) Int. Cl.: F01N 3/20

(54) **VERFAHREN ZUM BETRIEB EINER VORRICHTUNG ZUR BEREITSTELLUNG EINES FLÜSSIGEN ADDITIVS**
METHOD FOR OPERATING A DEVICE FOR PROVIDING A LIQUID ADDITIVE
PROCÉDÉ POUR FAIRE FONCTIONNER UN DISPOSITIF SERVANT À FOURNIR UN ADDITIF LIQUIDE

(30) Priorität: 07.12.2012 DE 102012111919
(43) Veröffentlichungstag der Anmeldung: 14.10.2015
(73) Patentinhaber: Continental Automotive GmbH, 30165 Hannover (DE)
(72) Erfinder: BRÜCK, Rolf, 51429 Bergisch Gladbach (DE); HODGSON, Jan, 53840 Troisdorf (DE)
(86) Internationale Anmeldenummer: PCT/EP2013/073450
(87) Internationale Veröffentlichungsnummer: WO 2014/086553

(56) Entgegenhaltungen:
- EP-A1- 3 008 302
- WO-A2-2006/131201
- DE-A1-102007 017 458

## Beschreibung

Die Erfindung betrifft ein Verfahren zum Betrieb einer Vorrichtung zur Bereitstellung von flüssigem Additiv. Vorrichtungen zur Bereitstellung von flüssigem Additiv werden beispielsweise bei Kraftfahrzeugen eingesetzt, um Abgasnachbehandlungsvorrichtungen ein flüssiges Additiv, wie beispielsweise Kraftstoff und/oder Harnstoffwasserlösung, zuzuführen.

Abgasbehandlungsvorrichtungen, denen ein flüssiges Additiv zugeführt wird, werden insbesondere bei Kraftfahrzeugen mit Dieselmotoren eingesetzt. Bei Dieselmotoren werden zur Reinigung der Abgase typischerweise Abgasbehandlungsvorrichtungen bzw. Abgasbehandlungsverfahren verwendet, bei denen Stickstoffoxidverbindungen im Abgas durch Zuhilfenahme eines flüssigen Additivs reduziert werden. Ein solches Abgasbehandlungsverfahren ist beispielsweise das Verfahren der selektiven katalytischen Reduktion [SCR-Verfahren, SCR = Selective Catalytic Reduction]. Als flüssiges Additiv wird für dieses Verfahren ein Reduktionsmittel bzw. ein Reduktionsmittelvorläufer verwendet. Besonders häufig wird Harnstoff-Wasser-Lösung als flüssiges Additiv eingesetzt, die z. B. zum Zweck des Verfahrens der selektiven katalytischen Reduktion mit einem Harnstoffgehalt von 32,5 % unter dem Handelsnamen AdBlue® erhältlich ist.

Bei der Konstruktion von Vorrichtungen zur Bereitstellung von flüssigem Additiv ist kritisch, dass die flüssigen, auf Wasser basierenden, Additive bei niedrigen Temperaturen einfrieren können. Die beschriebene Harnstoff-Wasser-Lösung AdBlue® friert beispielsweise bei -11 °C ein. Derart niedrige Temperaturen können in Kraftfahrzeugen insbesondere während langer Stillstandzeiten auftreten. Durch das Einfrieren des flüssigen Additivs tritt eine Volumenvergrößerung des flüssigen Additivs auf. Diese Volumenvergrößerung kann zu einem erheblichen Druckanstieg im System führen und daher besteht die Gefahr, dass bestimmte Komponenten der Vorrichtung beschädigt oder sogar zerstört werden.

Es ist bekannt, zur Vermeidung der Problematik der Volumenausdehnung beim Einfrieren des flüssigen Additivs die Vorrichtungen nach einem Betriebsstopp einer Verbrennungskraftmaschine zu entleert. Ist eine Entleerung erfolgt, liegt kein flüssiges Additiv in der Vorrichtung vor und eine Beschädigung durch eingefrorenes flüssiges Additiv kann nicht auftreten. Dies führt aber dazu, dass das System zunächst wieder vollständig "gefüllt" werden muss, bevor eine erneute, exakte Dosierung vorgenommen werden kann.

Um eine Vorrichtung zur Bereitstellung von flüssigem Additiv wieder schnell einsatzbereit zu machen, wenn eingefrorenes flüssiges Additiv in der Vorrichtung vorliegt, weisen derartige Vorrichtungen regelmäßig mindestens eine Heizung auf. Problematisch kann allerdings die Wärmeverteilung sein, die sich beim Betrieb einer Heizung innerhalb einer Vorrichtung zur Bereitstellung von flüssigem Additiv einstellt. Die Wärme der Heizung sollte zielgerichtet zum eingefrorenen flüssigen Additiv gelangen, um eine effektive Aufschmelzung des eingefrorenen flüssigen Additivs zu ermöglichen. Gleichzeitig sollten lokal unerwünscht hohe Temperaturen vermieden werden, weil diese zu einer chemischen Umwandlung des flüssigen Additivs führen können und ggf. sogar Komponenten der Vorrichtung durch zu hohe Temperaturen beschädigt werden können. Daher ist es wichtig, dass die von der Heizung erzeugte Wärme gut verteilt wird.

Die DE 10 2007 017458 A1 offenbart ein Verfahren zum Betreiben eines elektromagnetisch steuerbaren Reduktionsmitteldosierventils, das im Abgassystem eines Verbrennungsmotors angeordnet ist. Dieses Reduktionsmitteldosierventil wird je nach einer gemessenen Temperatur mit unterschiedlichen Stromprofilen angesteuert.

Die WO 2006 131201 A2 beschreibt ein Harnstoffversorgungssystem für einen Abgasreinigungskatalysator umfassend einen Heizeinsatz, welcher genutzt wird, um gefrorene Harnstofflösung aufzutauen. Durch aus einer Rückführleitung austretende Harnstofflösung wird im Betrieb das Auftreten eines isolierenden Luftspalts zwischen dem Heizeinsatz und der aufzutauenden Harnstofflösung verhindert.

Hiervon ausgehend ist es Aufgabe der hier vorliegenden Erfindung, die im Zusammenhang mit dem Stand der Technik geschilderten technischen Probleme zu lösen bzw. zumindest zu lindern. Es soll insbesondere ein besonders vorteilhaftes Verfahren zum Betrieb einer Vorrichtung zur Bereitstellung eines flüssigen Additivs beschrieben werden. Hierbei stehen insbesondere ein technisch einfacher Schutz gegen Einfrierbeschädigungen und eine schnelle Verfügbarkeit des Systems zur Bereitstellung von Additiv, wie Harnstoff-Wasser-Lösung, zum Abgassystem eines Kraftfahrzeugs im Fokus.

Diese Aufgaben werden gelöst mit einem Verfahren gemäß den Merkmalen des Patentanspruchs 1. Weitere vorteilhafte Ausgestaltungen des Verfahrens sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Das flüssige Additiv ist vorzugsweise Harnstoff-Wasser-Lösung. Mit dem Förderweg ist insbesondere ein Strömungspfad ausgehend von einer Ansaugstelle in einem Tank hin zu einer Zugabestelle für das flüssige Additiv an einer Abgasbehandlungsvorrichtung gemeint. Der Förderweg ist zumindest überwiegend durch eine Leitung und/oder einen Kanal gebildet, durch die das flüssige Additiv gefördert wird.
In dem Tank ist das flüssige Additiv gespeichert. Die Ansaugstelle ist vorzugsweise in der Nähe des Tankbodens ausgebildet, damit das in dem Tank gespeicherte flüssige Additiv möglichst vollständig aus dem Tank hinaus gefördert werden kann. Die Zugabestelle an der Abgasbehandlungsvorrichtung weist vorzugsweise mindestens einen Injektor und/oder eine Düse und/oder ein (passives) Ventil auf. Mit einer Düse kann das flüssige Additiv der Abgasbehandlungsvorrichtung vorzugsweise (ggf. mittels Druckluft) fein zerstäubt zugeführt werden. Ein Injektor ermöglicht eine Dosierung des flüssigen Additivs. Eine Dosierung wird beispielsweise über eine Festlegung der Öffnungszeit des Injektors zielorientiert vorgenommen.
An bzw. in dem Förderweg ist vorzugsweise ein Fördermittel angeordnet, mit dem die Förderung des flüssigen Additivs erfolgt. Das Fördermittel ist bevorzugt mindestens eine Pumpe. Als Fördermittel kann beispielsweise eine Kolbenpumpe, eine Membranpumpe oder eine Verdrängerpumpe eingesetzt werden. Das Fördermittel ist dazu eingerichtet, das flüssige Additiv ausgehend von der Ansaugstelle entlang des Förderwegs mit einer entsprechenden Förderrichtung hin zu der Zugabestelle zu fördern.
Der erste Abschnitt und der zweite Abschnitt sind Bereiche des Förderwegs, welche in Förderrichtung des flüssigen Additivs durch den Förderweg von dem Tank hin zu der Zugabestelle (ggf. direkt) hintereinander angeordnet sind. Der Förderweg kann mehrere erste Abschnitte und/oder mehrere zweite Abschnitte aufweisen. Unmittelbar hinter der Ansaugstelle ist vorzugsweise zumindest ein erster Abschnitt angeordnet. In Förderrichtung daran (ggf. direkt) anschließend befindet sich vorzugsweise zumindest ein zweiter Abschnitt.

Die Vorrichtung umfasst eine Baueinheit mit einem Gehäuse, die in einen Tank für flüssiges Additiv eingesetzt werden kann und in der alle Komponenten angeordnet sind, die zur Förderung und/oder Dosierung des flüssigen Additivs notwendig sind. Das Gehäuse der Vorrichtung bildet vorzugsweise einen Abschnitt einer Wand des Tanks aus. Das Gehäuse ist vorzugsweise in eine Öffnung des Bodens des Tanks eingesetzt und verschließt so die Öffnung im Boden des Tanks. Die Ansaugstelle zur Entnahme des flüssigen Additivs aus dem Tank ist vorzugsweise an dem Gehäuse ausgebildet. Die Ansaugstelle befindet sich so in der Nähe des Tankbodens. In dem Gehäuse ist vorzugweise auch die bereits erwähnte Heizung angeordnet. Diese Heizung kann eine elektrische Heizung oder eine Leitungsschleife zur Förderung eines Heizmediums sein, wobei das Heizmedium beim Durchlaufen der Leitungsschleife Wärme abgibt. Das Heizmedium kann beispielsweise (bereits erhitztes) Kühlwasser der Verbrennungskraftmaschine sein.

Mit einer Wärmeleitstrecke in dem ersten Abschnitt ist ein Bereich gemeint, der so gestaltet ist, dass durch diesen Wärme ausgehend von der Heizung hin zu dem Tank geleitet wird, so dass das Additiv in dem Tank aufgeheizt wird. Eine Wärmeleitstrecke ist demnach ein konstruktiver Bereich des Förderwegs ausgehend von der Heizung hin zum Innenraum des Tanks. Damit eine Wärmeleitstrecke vorhanden ist, müssen keine besonderen oder zusätzlichen Wärmeleitmittel vorhanden sein, die in Richtung des gewünschten Wärmeflusses ausgerichtet sind. Auch muss der Förderweg im Bereich der Wärmeleitstrecke nicht in derselben Richtung wie der gewünschte Wärmestrom verlaufen, damit das Merkmal einer Wärmeleitstrecke erfüllt ist. Bevorzugt ist beispielsweise, dass der Förderweg im Bereich der Wärmeleitstrecke typischerweise senkrecht zur Richtung der Wärmeleitstrecke verläuft bzw. parallel zu einem Sektor des Tanks, der aufgewärmt werden soll. Die Wärmeleitstrecke verläuft vorzugsweise auch durch das Gehäuse der Vorrichtung bzw. wenigstens teilweise parallel dazu. Vorzugsweise hat der Förderweg im Bereich der Wärmeleitstrecke eine große (zweidimensionale) Ausdehnung und bildet eine Fläche, die parallel zu dem Förderweg ist.

Die einfriersensible Komponente in dem zweiten Abschnitt ist beispielsweise ein elektronisches und/oder bewegbares Bauteil, wie insbesondere eine Pumpe, ein Sensor und/oder ein Ventil. Die einfriersensible Komponente hat insbesondere die Eigenschaft, dass diese durch eine Volumenausdehnung beim Einfrieren des - in der Nachbarschaft befindlichen - flüssigen Additivs beschädigt werden kann.

Das Fördern von flüssigem Additiv entlang des Förderwegs in Schritt a) entspricht einem normalen Betrieb einer Vorrichtung zur Bereitstellung des flüssigen Additivs. In Schritt a) wird das flüssige Additiv beispielsweise einer Abgasbehandlungsvorrichtung zugeführt. Während Schritt a) wird ein Kraftfahrzeug, in dem die beschriebene Vorrichtung eingebaut ist, üblicher Weise regulär betrieben. Das bedeutet, dass die Verbrennungskraftmaschine des Kraftfahrzeuges läuft und Abgase der Verbrennungskraftmaschine in der Abgasbehandlungsvorrichtung gereinigt werden. Zu diesem Zweck wird bedarfsgerecht und unter Einsatz der Vorrichtung Additiv dem Abgas zugegeben.

Das Stoppen der Förderung in Schritt b) geht üblicherweise mit einem Betriebsstopp der Förderung einher. Ein solcher Betriebsstopp findet insbesondere zeitgleich oder zeitnah zu einem Betriebsstopp des Kraftfahrzeugs statt, bei dem auch die Verbrennungskraftmaschine und die Abgasbehandlungsvorrichtung des Kraftfahrzeuges deaktiviert bzw. gestoppt werden. Daran anschließend tritt somit eine Stillstandsphase des Kraftfahrzeugs auf.

In Schritt c) wird der Förderweg (nur) teilweise entleert, wobei der mindestens eine zweite Abschnitte entleert wird und in dem mindestens einen ersten Abschnitt flüssiges Additiv verbleibt. Mit anderen Worten heißt das insbesondere, dass keine vollständige Entleerung vorgenommen wird, sondern gezielt alle zweiten Abschnitte von flüssigem Additiv befreit werden.

Dem beschriebenen Verfahren liegt die Erkenntnis zu Grunde, dass sich das Entleeren einer Vorrichtung zur Bereitstellung von flüssigem Additiv negativ auf die Verteilung der Wärme auswirken kann, die von einer Heizung in der Vorrichtung erzeugt wird. Dies liegt daran, dass die thermische Leitfähigkeit von flüssigem Additiv wesentlich höher ist als die thermische Leitfähigkeit von Luft oder Gas, welches in entleerten Abschnitten des Förderwegs üblicherweise vorliegt. Daher können entleerte Abschnitte des Förderwegs wie Isolationen wirken, die die Verteilung von Wärme einer Heizung behindern. Dies ist insbesondere dann der Fall, wenn der Förderweg abschnittsweise große flächige Bereiche (z. B. nach Art einer mäanderförmigen Heizschleifenanordnung) aufweist. Solche flächigen Abschnitte kann der Förderweg insbesondere im Bereich der Ansaugstelle aufweisen. Diese flächigen Bereiche bilden dann Wärmeleitstrecken ausgehend von einer Heizung in den Tank für das flüssige Additiv aus. Wenn nach der (teilweisen) Entleerung in solchen flächigen Bereich noch flüssiges Additiv verbleibt, wird eine besonders effektive Verteilung bzw. Weiterleitung der von der Heizung erzeugten Wärme ermöglicht. Gleichzeitig können jedoch die drucksensiblen Komponenten geschützt werden, weil das Additiv aus deren (direkter) Nachbarschaft entfernt wurde.

Besonders vorteilhaft ist das Verfahren, wenn die Förderung des flüssigen Additivs entlang des Förderwegs in Schritt a) mit einer Förderrichtung erfolgt, und die Entleerung in Schritt c) zumindest überwiegend entgegen der Förderrichtung erfolgt.

Hierbei ist bevorzugt, dass zur Entleerung des Förderwegs gemäß Schritt c) eine Förderrichtung einer Pumpe zur Förderung des flüssigen Additivs umgekehrt wird.

Um die Entleerung entgegen der Förderrichtung durchzuführen, ist ein Fördermittel (insbesondere eine Pumpe) vorgesehen, welche sowohl in Förderrichtung als auch in umgekehrter Richtung fördern kann. Flüssiges Additiv wird dann typischerweise durch die Ansaugstelle am Tank zurück in den Tank gedrückt. An der gegenüberliegenden Seite, also an einer Zugabestelle, wird dann Gas bzw. Luft angesaugt. Von hier ausgehend wird der Förderweg dann mit Luft bzw. Gas befüllt, die das flüssige Additiv ersetzt. Durch eine Umkehrung der Pumpe wird also das Additiv mit einer Rückförderrichtung gepumpt, die der Förderrichtung entgegengerichtet ist. Es ist möglich, dass jeder Anteil des rückgeförderten Additivs ausschließlich hin zur Ansaugstelle gefördert wird, allerdings kann auch vorgesehen sein, dass an dem Förderweg z. B. mindestens ein (abzweigendes) Speichervolumen vorgesehen ist, in das ein (geringer) Anteil des rückgeförderten Additives während Schritt c) einströmt. Für den letztgenannten Fall soll gleichwohl gelten, dass der "überwiegende Anteil" des rückgeförderten Additives entgegen der Förderrichtung aus dem Förderweg entnommen wird.

Eine derartige Umkehr der Förderrichtung einer Pumpe ist eine technisch besonders einfache Variante, um eine umkehrbare Förderrichtung in einer Vorrichtung zu realisieren. Eine Pumpe mit umkehrbarer Förderrichtung ist beispielsweise eine Peristaltikpumpe. Bei einer Peristaltikpumpe wird ein Abschnitt des Förderwegs nach Art einer Peristaltikbewegung verformt, um das flüssige Additiv in Förderrichtung zu bewegen. Eine solche Pumpe hat vorzugsweise einen Rotationsantrieb, der über ein bewegliches Pumpenelement die Peristaltikbewegung antreibt. Das bewegliche Pumpenelement kann beispielsweise ein Exzenter sein. Eine solche Pumpe ist vorzugsweise so gestaltet, dass durch eine Umkehr der Antriebsrichtung des Antriebs eine Umkehr der Förderrichtung möglich ist.

Nach einer weiteren Ausführungsvariante ist auch möglich, dass eine Vorrichtung zur Bereitstellung von flüssigem Additiv zwei (ggf. verschiedene) Fördermittel hat, wobei ein erstes Fördermittel dazu eingerichtet ist, flüssiges Additiv im regulären Betrieb (Schritt a)) zu fördern und ein weiteres Fördermittel dazu eingerichtet ist, den Förderweg entgegen der Förderrichtung zu entleeren. Die beiden Fördermittel können entlang des Förderwegs in Reihe oder parallel zueinander in parallelen Bereichen des Förderwegs angeordnet sein.

Einer weiteren Ausführungsvariante des Verfahrens folgend ist es auch möglich, dass die Vorrichtung zur Bereitstellung des flüssigen Additivs eine Rücklaufleitung aufweist, die von dem Förderweg abzweigt und zurück in einen Tank führt. Die Entleerung des Förderwegs kann auch durch die Rückführleitung erfolgen.

Bei dem Verfahren bildet der erste Abschnitt eine Mantelfläche um die Heizung herum aus.

Die Mantelfläche bildet vorzugsweise (wenigstens teilweise) eine Ummantelung und/oder eine Umhüllung des Gehäuses der Vorrichtung aus. Die Mantelfläche bzw. der erste Abschnitt ist vorzugsweise ein nach Art eines Hohlzylinders geformter Bereich, der um ein Gehäuse der Vorrichtung herum ausgebildet ist. Ein solcher Bereich kann beispielsweise zwischen dem Gehäuse und einer Haube angeordnet sein, welche das Gehäuse gegenüber dem Innenraum eines Tanks abdeckt. Auf der Unterseite der Mantelfläche kann ein ringförmiger Verbindungsspalt die Ansaugstelle hin zum Tank bilden. Eine solche Mantelfläche kann vorteilhafterweise auch ein Additiv-Startvolumen im Tank bilden bzw. begrenzen, in dem bereits unmittelbar nach Inbetriebnahme der Vorrichtung eine für den Startvorgang ausreichende Menge an flüssigem Additiv geschmolzen wird. Im Bereich einer solchen Mantelfläche kann die Heizung das flüssige Additiv besonders effektiv aufheizen. Dies wäre allerdings nicht möglich, wenn die Mantelfläche frei von flüssigem Additiv ist. Daher ist insbesondere bei einer solchen Gestaltung der Vorrichtung das beschriebene Verfahren vorteilhaft.

Weiterhin ist das Verfahren vorteilhaft, wenn in dem ersten Abschnitt ein Filter zur Filterung des flüssigen Additivs angeordnet ist. Der Filter ist besonders bevorzugt in dem ersten Abschnitt angeordnet, wenn der erste Abschnitt eine Mantelfläche ist. Eine solche Mantelfläche bietet ausreichend Raum für einen Filter zur Reinigung des flüssigen Additivs. Ein Filter zur Reinigung des flüssigen Additivs ist bei einer beschriebenen Vorrichtung sinnvoll, um zu vermeiden, dass Verunreinigungen des flüssigen Additivs in den Förderweg eindringen und Komponenten der Vorrichtung verschmutzen können.

Weiterhin ist das Verfahren bevorzugt, wenn zur teilweisen Entleerung des Förderwegs in Schritt c) eine Pumpe für ein vorgegebenes Zeitintervall betrieben wird, wobei das Zeitintervall so gewählt ist, dass in dem mindestens einen ersten Abschnitt flüssiges Additiv verbleibt.

Die Entleerung des Förderwegs benötigt eine vom Aufbau der Vorrichtung abhängige aber einfach zu bestimmende Zeitdauer. Diese Zeitdauer ist insbesondere von der Länge des Förderwegs und der (rückwärtigen) Fördergeschwindigkeit des flüssigen Additivs in dem Förderweg abhängig. Durch den Betrieb einer Pumpe zur Entleerung des Förderwegs für ein Zeitintervall, welches kürzer ist als die Zeitdauer, die notwendig ist, um den Förderweg vollständig zu entleeren, kann sichergestellt werden, dass in dem Förderweg teilweise flüssiges Additiv verbleibt. Bei der Methode zur Entleerung des Förderwegs (mit einer einzelnen Pumpe) sollte sichergestellt sein, dass das flüssige Additiv bei der Entleerung zunächst aus dem zweiten Abschnitt entfernt wird, damit beim Stopp der Entleerung nach dem Zeitintervall noch flüssiges Additiv in dem ersten Abschnitt vorliegt, während der zweite Abschnitt bereits vollständig entleert ist. Daher ist die Ausführungsvariante des Verfahrens insbesondere dann vorteilhaft, wenn der zumindest eine erste Abschnitt in Förderrichtung von der Ansaugstelle zur Zugabestelle vor dem zumindest einen zweiten Abschnitt liegt.

Weiterhin ist das Verfahren vorteilhaft, wenn die teilweise Entleerung des Förderwegs in Schritt c) mit mindestens einem Sensorelement überwacht wird, wobei das Sensorelement an einem Punkt des Förderweges angeordnet und dazu eingerichtet ist, zu erkennen, ob an dem Punkt flüssiges Additiv vorliegt, und weiter die Entleerung gestoppt wird, sobald an dem Punkt kein flüssiges Additiv mehr vorliegt.

Das Sensorelement kann beispielsweise aus zwei elektrischen Pinnen bestehen, zwischen welchen eine elektrisch leitfähige Verbindung besteht, solange flüssiges Additiv an den Pinnen anliegt. Wenn das flüssige Additiv nicht mehr an den Pinnen anliegt, wird die elektrische Verbindung getrennt und es kann erkannt werden, dass an dem Punkt kein flüssiges Additiv mehr vorliegt. Ein solches Sensorelement zum Erkennen, ob flüssiges Additiv vorliegt oder nicht, ist insbesondere dann vorteilhaft, wenn aufgrund von Unsicherheiten bezüglich der Fördergeschwindigkeit für das flüssige Additiv beim Entleeren eine reine Zeitsteuerung zur Überwachung von Schritt c) nicht ausreicht. Auch wenn das Sensorelement grundsätzlich dazu vorgesehen sein kann, andere Überwachungsfunktionen ebenfalls zu übernehmen, kann alternativ ein (technisch einfach aufgebautes) separates Sensorelement eingesetzt werden, das nur zu dem vorstehend genannten Zweck vorgesehen ist.

Auch ist vorteilhaft, wenn das Sensorelement ein Drucksensor ist und der von dem Drucksensor gemessene Druck sich in Abhängigkeit des Füllgrads des Förderwegs ändert.

Bei dieser Variante ist es möglich, über den Druck zu erkennen, inwieweit der Förderweg während Schritt c) bereits entleert ist, um die Entleerung zu stoppen, sobald der zumindest eine zweite Abschnitt entleert ist und wenn in dem zumindest einen ersten Abschnitt noch flüssiges Additiv vorliegt.

Eine Abhängigkeit zwischen dem Druck an einem Drucksensor und dem Füllgrad des Förderwegs kann es beispielsweise durch den hydrostatischen Druck des flüssigen Additivs in dem Förderweg geben. So ist der hydrostatische Druck größer, je mehr flüssiges Additiv in dem Förderweg vorhanden ist. Ein Drucksensor ist in einer Vorrichtung zur Bereitstellung von flüssigem Additiv normalerweise vorgesehen, um den regulären Betrieb der Vorrichtung während der Bereitstellung des flüssigen Additivs (Schritt a)) zu überwachen und/oder zu regeln. Es ist besonders vorteilhaft, wenn dieser Drucksensor zusätzlich in Schritt c) genutzt wird, um zu überwachen, inwieweit der Förderweg bereits entleert ist. Dann sind keine zusätzlichen Komponenten für die Überwachung von Schritt c) notwendig.

Weiterhin ist das Verfahren vorteilhaft, wenn zur teilweisen Entleerung des Förderweges in Schritt c) eine Pumpe verwendet wird, wobei ein Betriebsparameter der Pumpe sich in Abhängigkeit eines Füllgrads des Förderwegs mit flüssigem Additiv ändert und ein Betrieb der Pumpe zur Entleerung bei Erreichen eines vorgegebenen Werts des Betriebsparameters gestoppt wird.

Ein solcher Betriebsparameter kann beispielsweise ein Ansprechverhalten der Pumpe auf einen anliegenden Betriebsstrom sein. Beispielsweise reagiert ein bewegliches Pumpenelement schneller mit einer Bewegung auf einen anliegenden Betriebsstrom, wenn die Menge an flüssigem Additiv in dem Förderweg geringer ist. Dies kann der Fall sein, weil die von der Pumpe zu bewegende Menge an flüssigem Additiv in diesem Falle bereits reduziert ist. Die Überwachung des Füllgrads des Förderwegs anhand eines Betriebsparameters einer Pumpe erlaubt es, auf zusätzliche Komponenten zur Überwachung der Entleerung in Schritt c) zu verzichten.

Weiterhin ist das Verfahren vorteilhaft, wenn die Pumpe während der Entleerung zu mindestens einem vorgegebenen Zeitpunkt in einen Diagnosemodus versetzt wird, wobei der von dem Füllgrad des Förderwegs abhängige Betriebsparameter der Pumpe während des Diagnosemodus ermittelt wird.

Mit einem Diagnosemodus ist ein spezieller Betriebsmodus der Vorrichtung gemeint, welcher lediglich aktiviert wird, um den Füllgrad des Förderwegs zu überwachen. Der Diagnosemodus kann beispielsweise in einem speziellen Pumpenpuls liegen, welcher mit einem vorgegebenen bzw. definierten Diagnose-Antriebsstrom der Pumpe erzeugt wird. So kann eine bessere Vergleichbarkeit des Betriebsparameters gewährleistet werden, damit die Ermittlung des Füllgrades des Förderwegs besonders genau ist.

Es ist auch möglich, dass ein Füllgrad des Förderwegs anhand eines Drucks und/oder einer Druckänderung bestimmt wird, die mit einem Drucksensor gemessen wird und die auftritt, wenn die Pumpe einen Pumpenpuls ausübt. Dieser Pumpenpuls kann ein normaler Puls (wie während des normalen Betriebs der Pumpe beim Entleeren) und/oder ein spezieller Pumpenpuls (entsprechend eines speziellen Diagnosemodus zur Überwachung des Füllgrades) sein.

Weiterhin ist das Verfahren vorteilhaft, wenn zur teilweisen Entleerung des Förderwegs in Schritt c) der Förderweg zunächst vollständig entleert wird und der Förderweg anschließend wieder teilweise mit flüssigem Additiv befüllt wird, so dass in dem mindestens einen ersten Abschnitt flüssiges Additiv vorliegt.

Bei dieser Betriebsweise wird bevorzugt zunächst nicht überwacht, ob der Förderweg nur teilweise entleert wird oder nicht. Es wird folglich immer gewährleistet, dass eine vollständige Entleerung des Förderwegs erfolgte. Dies kann beispielsweise dadurch geschehen, dass eine Pumpe zur Entleerung des Förderwegs für ein Zeitintervall betrieben wird, welches ausreichend lang ist, um eine vollständige Entleerung des Förderwegs in jedem Fall sicherzustellen. Anschließend (also insbesondere unmittelbar anschließend und/oder ohne Beendigung des "Betriebsstopps") wird (nur) eine teilweise Wiederbefüllung des Förderwegs durchgeführt. Dabei wird der Förderweg nicht wieder vollständig befüllt. Eine solche teilweise Wiederbefüllung kann mit allen weiter oben beschriebenen Verfahren überwacht werden, die auch zur Überwachung der Entleerung geeignet sind.

Eine derartige zweistufige Verfahrensführung, bei der zunächst eine vollständige Entleerung und dann wieder eine nur teilweise Befüllung erfolgt, kann vorteilhaft sein, weil die Menge, die beim Entleeren aus dem Förderweg hinausgefördert wird, typischerweise wesentlich größer ist als die Menge, die beim Wiederbefüllen wieder in den Förderweg hineingefördert wird. Daher ist es erheblich einfacher, das Wiederbefüllen präzise so durchzuführen, dass in dem ersten Abschnitt flüssiges Additiv verbleibt, während der zweite Abschnitt vollständig entleert ist.

Gemäß einer weiteren Ausführungsform des beschriebenen Verfahrens ist es bevorzugt, dass in Schritt c) die teilweise Wiederbefüllung nach einer vollständigen Entleerung des Förderwegs über die Rücklaufleitung erfolgt. Durch diese Verfahrensführung wird auch ermöglicht, dass erste Abschnitte des Förderwegs mit flüssigem Additiv wieder befüllt werden, die in Förderrichtung hinter zweiten Abschnitten liegen, die entleert bleiben sollen. Wenn der Förderweg in Schritt c) zunächst vollständig entleert wird, kann dieser anschließend abwechselnd und zielgerichtet durch die Zugabestelle mit Gas bzw. Luft und die Rücklaufleitung mit flüssigem Additiv befüllt werden. Diese abwechselnde Befüllung kann so erfolgen, dass nach Schritt c) in ersten Abschnitten flüssiges Additiv vorliegt, welches durch die Rücklaufleitung in den Förderweg gelangt ist, während in zweiten Abschnitten Gas bzw. Luft vorliegt, die durch die Zugabestelle in den Förderweg gelangt ist. Während der beschriebenen zielgerichteten Befüllung des Förderkanals kann eine Förderpumpe auch ihre Förderrichtung umkehren. So können auch vorgesehene Mengen des flüssigen Additivs zielgerichtet in den Abschnitten des Förderwegs zwischen der Rückführleitung und der Zugabestelle gefördert werden.

Zudem ist das Verfahren vorteilhaft, wenn der Förderweg mindestens einen Siphon aufweist, wobei der mindestens eine erste Abschnitt in dem Siphon ausgebildet wird.

Ein derartiger Siphon ist insbesondere durch eine U-förmige Gestaltung des Förderwegs gekennzeichnet. Hierbei gibt es einen unteren Bereich des Förderwegs, welcher jeweils zu zwei erhöhten Bereichen des Förderwegs benachbart ist. Die erhöhten Bereiche sind in Bezug auf ihre geodätische Lage höher angeordnet als der untere Bereich. In einem solchem Siphon sammelt sich typischerweise aufgrund der Schwerkraft eine Restmenge des flüssigen Additivs, wenn der Förderweg teilweise entleert ist. Vorzugsweise ist der erste Abschnitt in einem solchen Siphon angeordnet. Durch die konstruktive Maßnahme eines Siphons kann sichergestellt werden, dass die in dem Förderweg vorhandene Menge an flüssigem Additiv auch bei äußeren Einflüssen in dem ersten Abschnitt verbleibt. Solche äußeren Einflüsse sind beispielsweise, wenn die Vorrichtung in teilweise entleertem Füllstand bewegt, gekippt und/oder verschoben wird, sowie wenn Vibrationen auf die Vorrichtung einwirken.

Ein Siphon ist daher eine besonders zuverlässige Möglichkeit, die teilweise Entleerung des Förderwegs in der gewünschten Form mit entleerten zweiten Abschnitten und einem befüllten ersten Abschnitt auch während langer Stillstandszeiten eines Kraftfahrzeuges aufrechtzuerhalten. Die Integration mindestens eines Siphons im Förderweg, kann ausdrücklich mit allen beschriebenen Maßnahmen zur Erzeugung einer Verteilung des flüssigen Additivs in dem Förderweg mit befüllten ersten Abschnitten und entleerten zweiten Abschnitten kombiniert werden. Es ist auch möglich, dass zur Aufrechterhaltung besagter Verteilung nur der beschriebene Siphon vorgesehen ist und in Schritt c) keine bewussten (zusätzlichen bzw. aktiven) Verfahrensschritte zur Erzeugung der Verteilung durchgeführt werden.

Die Erfindung findet insbesondere Anwendung bei einer Vorrichtung zur Bereitstellung eines flüssigen Additivs mit einem Förderweg, in dem das flüssige Additiv gefördert wird, wobei der Förderweg einen ersten Abschnitt aufweist, welcher eine Wärmeleitstrecke von einer Heizung der Vorrichtung hin in einen Tank für das flüssige Additiv ausbildet, und der Förderweg weiter mindestens einen zweiten Abschnitt aufweist, in dem eine einfriersensible Komponente angeordnet ist, wobei die Vorrichtung zur Durchführung wenigstens einer hier beschriebenen Variante des erfindungsgemäßen Verfahrens eingerichtet ist.

Außerdem soll ein Kraftfahrzeug angegeben werden, aufweisend eine Verbrennungskraftmaschine und eine Abgasbehandlungsvorrichtung zur Reinigung der Abgase der Verbrennungskraftmaschine. In der Abgasbehandlungsvorrichtung ist vorzugsweise ein SCR-Katalysator vorgesehen, mit welchem das Verfahren zur selektiven katalytischen Reduktion zur Abgasreinigung durchgeführt werden kann. Der Abgasbehandlungsvorrichtung ist über eine Zugabestelle ein flüssiges Additiv für die Durchführung des SCR-Verfahrens zuführbar. So wird ein Injektor an der Zugabestelle von der beschriebenen Vorrichtung mit flüssigem Additiv aus einem Tank versorgt. Zur Durchführung des beschriebenen Verfahrens kann ein Steuergerät eingesetzt werden, in dem die zur Durchführung des Verfahrens benötigen Verfahrensschritte bzw. Verfahrensabläufe hinterlegt sind. Das Steuergerät kann beispielsweise Bestandteil der Motorsteuerung des Kraftfahrzeugs sein.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: eine erste Ausführungsvariante einer Vorrichtung für das beschriebene Verfahren,
- Fig. 2:: eine Schnittansicht der Vorrichtung aus Fig. 1,
- Fig. 3:: eine zweite Ausführungsführungsvariante einer Vorrichtung für das beschriebene Verfahren,
- Fig. 4:: eine dritte Ausführungsvariante einer Vorrichtung für das beschriebene Verfahren,
- Fig. 5:: ein Ablaufdiagramm des beschriebenen Verfahrens,
- Fig. 6:: noch eine weitere Ausführungsvariante einer Vorrichtung zur Durchführung des beschriebenen Verfahrens, und
- Fig. 7:: ein Kraftfahrzeug aufweisend eine Vorrichtung für das beschriebene Verfahren.

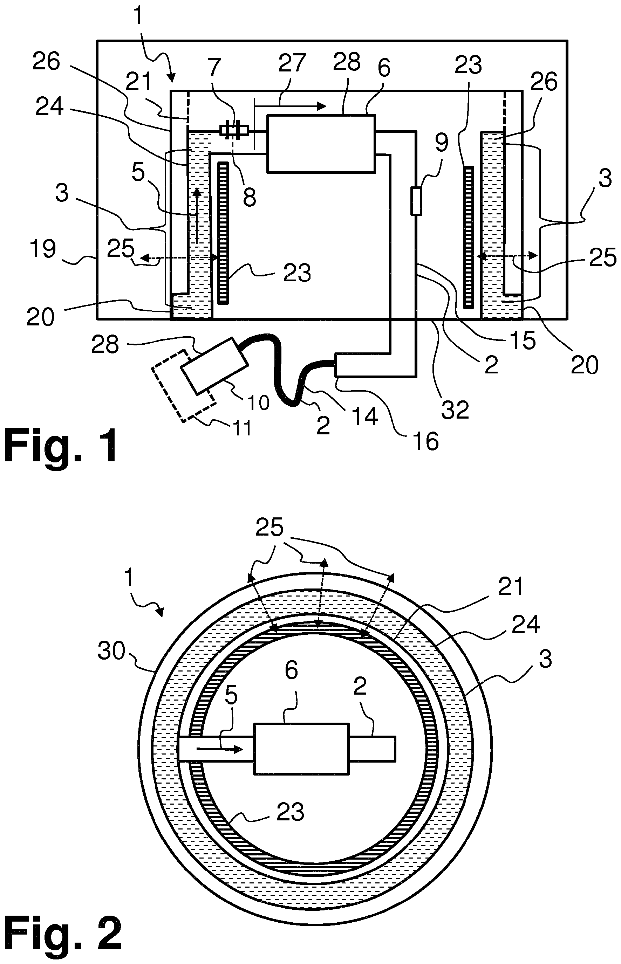

In den Fig. 1, 3 und 4 sind jeweils Vorrichtungen 1 dargestellt, mit denen flüssiges Additiv 26 (hier insbesondere Harnstoff-Wasser-Lösung) aus einem Tank 19 entnommen werden kann. Die Vorrichtungen 1 weisen ein Gehäuse 21 auf, welches in eine Öffnung an einem Boden 32 des Tanks 19 eingesetzt ist. An dem Gehäuse 21 ist vorzugsweise eine Ansaugstelle 20 angeordnet, über die das flüssige Additiv 26 aus dem Tank 19 in den Förderweg 2 gelangen kann.

Der Förderweg 2 erstreckt sich ausgehend von der Ansaugstelle 20 mit einer Förderrichtung 5 hin zu einer Abgasbehandlungsvorrichtung 11. An der Abgasbehandlungsvorrichtung 11 ist eine Zugabestelle 10 vorgesehen, über die das flüssige Additiv 26 der Abgasbehandlungsvorrichtung 11 zugeführt werden kann.

Der Förderweg 2 wird teilweise von einem Förderkanal 15 gebildet, welcher sich (zunächst bzw. teilweise) durch das Gehäuse 21 hindurch erstreckt. Der Förderweg 2 wird auch von einer Versorgungsleitung 14 gebildet, die sich von dem Gehäuse 21 der Vorrichtung hin zu der Zugabestelle 10 erstreckt. Die Versorgungsleitung 14 ist an einem Anschluss 16 an das Gehäuse 21 bzw. an den Förderkanal 15 anschließbar.

Entlang der Förderrichtung 5 befinden sich an dem Förderweg 2 verschiedene Komponenten, die zur Förderung des flüssigen Additivs 26 dienen. Diese Komponenten sind beispielsweise eine Pumpe 6, mit der die Förderung des flüssigen Additivs erfolgt, sowie Sensorelemente 7 und/oder Drucksensoren 9.

In dem Gehäuse 21 ist auch eine Heizung 23 vorgesehen, mit der das flüssige Additiv 26 erwärmt oder gefrorenes Additiv aufgeheizt bzw. geschmolzen werden kann. Von der Heizung 23 ausgehend in einen Innenraum des Tanks 19 hinein verläuft eine (erkennbare, physikalische) Wärmeleitstrecke 25. Der Förderweg 2 ist in einem ersten Abschnitt 3 Bestandteil dieser Wärmeleitstrecke 25. Dadurch, dass beim Betrieb der Vorrichtung mit dem beschriebenen Verfahren in dem ersten Abschnitt 3 flüssiges Additiv 26 verbleibt, kann sichergestellt werden, dass in der Wärmeleitstrecke 25 eine hohe Wärmeleitfähigkeit von der Heizung 23 hin zu dem Tank 19 existiert.

Der Förderweg 2 hat weiter mindestens einen zweiten Abschnitt 27, in dem sich wenigstens eine einfriersensible Komponenten 28 befindet. Einfriersensible Komponenten 28 sind beispielsweise die Pumpe 6 zur Förderung des flüssigen Additivs oder ein Injektor, der an der Zugabestelle 10 angeordnet ist. Mit Hilfe des Sensorelements 7 kann überwacht werden, ob an einem bestimmten Punkt 8 des Förderwegs 2 noch flüssiges Additiv 26 vorliegt oder nicht. Hierdurch ermöglicht das Sensorelement 7 den Füllgrad des Förderwegs 2 im Rahmen des beschriebenen Verfahrens effektiv zu überwachen.

Der erste Abschnitt 3 des Förderwegs ist vorzugsweise eine Mantelfläche 24, welche das Gehäuse 21 der Vorrichtung 1 umgibt. Dies ist insbesondere in Fig. 2 zu erkennen, die eine waagerechte Schnittansicht durch die in Fig. 1 dargestellte Vorrichtung 1 zeigt. Zu erkennen ist das Gehäuse 21 sowie eine Haube 30, welche das Gehäuse 21 umgibt, und die zwischen dem Gehäuse 21 und der Haube 30 angeordnete Mantelfläche 24, die den ersten Abschnitt 3 des Förderwegs bildet. Die in Fig. 1 erkennbare Ansaugstelle 20 bildet einen umlaufenden Spalt unterhalb der Mantelfläche 24. Die Mantelfläche 24 bzw. der erste Abschnitt 3 bildet eine Wärmeleitstrecke 25 von der Heizung 23 in den Innenraum des Tanks.

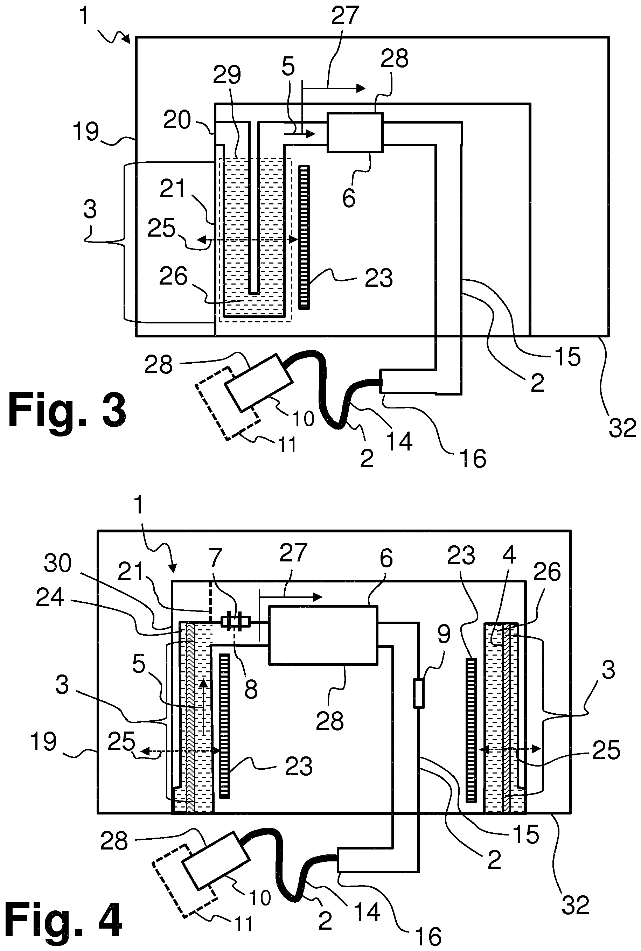

Fig. 3 zeigt eine weitere Ausführungsvariante einer Vorrichtung 1. Hier ist der erste Abschnitt 3 als Siphon 29 ausgeführt. Durch diese Ausführungsvariante kann technisch besonders einfach sichergestellt werden, dass flüssiges Additiv 26 in dem ersten Abschnitt 3 verbleibt.

Fig. 4 zeigt eine Abwandlung der Vorrichtung 1 gemäß Fig. 1. Hier ist in der Mantelfläche 24 zusätzlich ein Filter 4 angeordnet, mit dem das flüssige Additiv gefiltert werden kann.

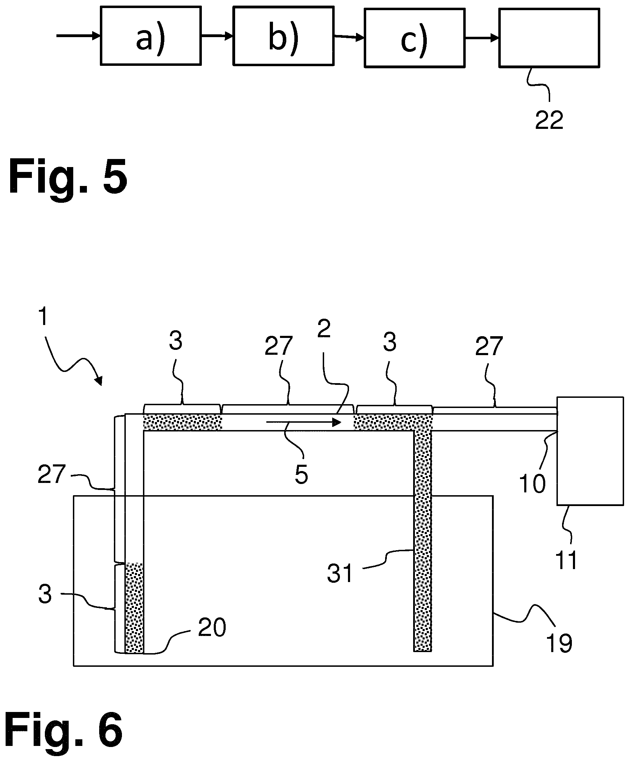

Fig. 5 zeigt ein Ablaufdiagramm des beschriebenen Verfahrens mit den Verfahrensschritten a), b) und c). An den Verfahrensschritt c), welcher die teilweise Entleerung des Förderwegs betrifft, schließt sich eine Einfrierphase 22 an, die einsetzt, wenn die Vorrichtung nach dem Betriebsstopp in Schritt b) niedrigen Temperaturen ausgesetzt wird. Dabei ist zu erkennen, dass die Schritte a), b) und c) zeitlich nacheinander durchgeführt werden.

Fig. 6 zeigt noch eine weitere Ausführungsvariante einer Vorrichtung 1 zur Durchführung des beschriebenen Verfahrens. Auch diese Vorrichtung 1 hat einen Förderweg 2, der sich von einer Ansaugstelle 20 an einem Tank 19 mit einer Förderrichtung 5 hin zu einer Zugabestelle 10 an einer Abgasbehandlungsvorrichtung 11 erstreckt. Von dem Förderweg 2 zweigt eine Rücklaufleitung 31 ab, die ebenfalls an den Tank 19 angeschlossen ist. Wenn der Förderweg 2 dieser Vorrichtung 1 in Schritt c) zunächst vollständig entleert wird, kann der Förderweg 2 in Schritt c) anschließend abwechselnd über die Rücklaufleitung 31 mit flüssigen Additiv und über die Zugabestelle 10 mit Gas bzw. Luft wieder befüllt werden. So kann zielgerichtet erreicht werden, dass in ersten Abschnitten 3 flüssiges Additiv vorliegt, während in zweiten Abschnitten 27 kein flüssiges Additiv vorliegt.

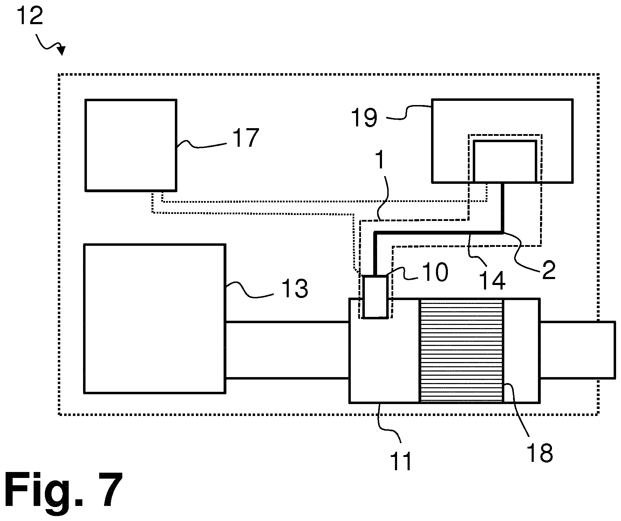

Fig. 7 zeigt ein Kraftfahrzeug 12 mit einer Verbrennungskraftmaschine 13 (wie einen Dieselmotor) und einer Abgasbehandlungsvorrichtung 11 zur Reinigung der Abgase der Verbrennungskraftmaschine 13. In der Abgasbehandlungsvorrichtung 11 ist ein SCR-Katalysator 18 zur Durchführung des Verfahrens der selektiven katalytischen Reduktion angeordnet. Für dieses Verfahren kann der Abgasbehandlungsvorrichtung 11 mit einer Vorrichtung 1 an einer Zugabestelle 10 flüssiges Additiv aus einem Tank 19 zugeführt werden. Der Tank 19 ist dazu über eine Versorgungsleitung 14 mit dem Tank 19 verbunden. Das Kraftfahrzeug 12 kann ein Steuergerät 17 aufweisen, welches Bestandteil der Motorsteuerung des Kraftfahrzeugs 12 sein kann, und welches das beschriebene Verfahren mit der Vorrichtung 1 durchführt.

### Bezugszeichenliste

- 1: Vorrichtung
- 2: Förderweg
- 3: Abschnitt
- 4: Filter
- 5: Förderrichtung
- 6: Pumpe
- 7: Sensorelement
- 8: Punkt
- 9: Drucksensor
- 10: Zugabestelle
- 11: Abgasbehandlungsvorrichtung
- 12: Kraftfahrzeug
- 13: Verbrennungskraftmaschine
- 14: Versorgungsleitung
- 15: Förderkanal
- 16: Anschluss
- 17: Steuergerät
- 18: SCR-Katalysator
- 19: Tank
- 20: Ansaugstelle
- 21: Gehäuse
- 22: Einfrierphase
- 23: Heizung
- 24: Mantelfläche
- 25: Wärmeleitstrecke
- 26: flüssiges Additiv
- 27: zweiter Abschnitt
- 28: einfriersensible Komponente
- 29: Siphon
- 30: Haube
- 31: Rücklaufleitung
- 32: Boden

## Patentansprüche

1. Verfahren zum Betrieb einer Vorrichtung (1) zur Bereitstellung eines flüssigen Additives (26), wobei die Vorrichtung (1) eine Baueinheit mit einem Gehäuse (21) umfasst, die in einem Tank (19) für flüssiges Additiv eingesetzt ist, mit einem Förderweg (2), entlang welchem das flüssige Additiv (26) gefördert wird, wobei sich der Förderweg (2) ausgehend von einer Ansaugstelle (20) an dem Gehäuse (21) mit einer Förderrichtung hin zu einer Abgasbehandlungsvorrichtung (11) erstreckt und mindestens einen ersten Abschnitt (3) hat, welcher eine Wärmeleitstrecke (25) von einer Heizung (23) der Vorrichtung (1) hin in den Tank (19) für das flüssige Additiv (26) ausbildet und der Förderweg (2) weiter mindestens einen zweiten Abschnitt (27) aufweist, in dem eine einfriersensible Komponente (28) angeordnet ist, aufweisend zumindest die folgenden Schritte:
a) Fördern von flüssigem Additiv (26) entlang des Förderwegs (2) der Vorrichtung (1);
b) Stoppen der Förderung von flüssigem Additiv (26);
c) Teilweises Entleeren des Förderwegs (2), wobei in dem mindestens einen ersten Abschnitt (3) des Förderwegs (2) flüssiges Additiv (26) verbleibt, während der mindestens eine zweite Abschnitt (27 entleert wird,
**dadurch gekennzeichnet, dass**:
der erste Abschnitt (3) eine Mantelfläche (24) um die Heizung (23) herum ausbildet.

2. Verfahren nach Patentanspruch 1, wobei die Förderung des flüssigen Additivs (26) entlang des Förderwegs (2) in Schritt a) mit einer Förderrichtung (5) erfolgt, und die Entleerung in Schritt c) zumindest überwiegend entgegen der Förderrichtung (5) erfolgt.

3. Verfahren nach Patentanspruch 2, wobei zur Entleerung des Förderwegs gemäß Schritt c) eine Förderrichtung einer Pumpe (6) zur Förderung des flüssigen Additivs (26) umgekehrt wird.

4. Verfahren nach einem der vorhergehenden Patentansprüche, wobei in dem ersten Abschnitt (3) ein Filter (4) zur Filterung des flüssigen Additivs (26) angeordnet ist.

5. Verfahren nach einem der vorhergehenden Patentansprüche, wobei zur teilweisen Entleerung des Förderwegs (2) in Schritt c) eine Pumpe (6) für ein vorgegebenes Zeitintervall betrieben wird, wobei das Zeitintervall so gewählt ist, dass in dem mindestens einen ersten Abschnitt (3) flüssiges Additiv verbleibt.

6. Verfahren nach einem der vorhergehenden Patentansprüche, wobei die teilweise Entleerung des Förderwegs in Schritt c) mit mindestens einem Sensorelement (7) überwacht wird, wobei das Sensorelement (7) an einem Punkt (8) des Förderweges (2) angeordnet und dazu eingerichtet ist, zu erkennen, ob an dem Punkt (8) flüssiges Additiv vorliegt, und weiter die Entleerung gestoppt wird, sobald an dem Punkt (8) kein flüssiges Additiv mehr vorliegt.

7. Verfahren nach Patentanspruch 6, wobei das Sensorelement (7) ein Drucksensor (9) ist und der von dem Drucksensor (9) gemessene Druck sich in Abhängigkeit des Füllgrades des Förderwegs (2) ändert.

8. Verfahren nach einem der vorhergehenden Patentansprüche, wobei zur teilweisen Entleerung des Förderweges (2) in Schritt c) eine Pumpe (6) verwendet wird, wobei ein Betriebsparameter sich in Abhängigkeit ein Füllgrades des Förderweges (2) mit flüssigem Additiv ändert und ein Betrieb der Pumpe (6) zur Entleerung bei Erreichen eines vorgegebenen Wertes des Betriebsparameters gestoppt wird.

9. Verfahren nach Patentanspruch 8, wobei die Pumpe (6) während der Entleerung zu mindestens einem vorgegebenen Zeitpunkt in einen Diagnosemodus versetzt wird, wobei der von dem Füllgrad des Förderwegs (2) abhängige Betriebsparameter während des Diagnosemodus ermittelt wird.

10. Verfahren nach einem der vorhergehenden Patentansprüche, wobei zur teilweisen Entleerung des Förderweges (2) in Schritt c) der Förderweg (2) zunächst vollständig entleert wird und der Förderweg (2) anschließend wieder teilweise mit flüssigem Additiv befüllt wird, so dass in dem mindestens einen ersten Abschnitt (3) flüssiges Additiv vorliegt.

11. Verfahren nach einem der vorhergehenden Patentansprüche, wobei der Förderweg (2) mindestens einen Siphon (29) aufweist, wobei der mindestens eine erste Abschnitt (3) in dem Siphon (29) ausgebildet wird.

12. Vorrichtung (1) zur Bereitstellung eines flüssigen Additivs (26) mit einem Förderweg (2) entlang dem flüssiges Additiv (26) gefördert wird, wobei die Vorrichtung (1) eine Baueinheit mit einem Gehäuse (21) umfasst, die in einem Tank (19) für flüssiges Additiv eingesetzt ist, wobei sich der Förderweg (2) ausgehend von einer Ansaugstelle (20) an dem Gehäuse (21) mit einer Förderrichtung hin zu einer Abgasbehandlungsvorrichtung (11) erstreckt und mindestens einen ersten Abschnitt (3) hat, welcher eine Wärmeleitstrecke (25) von einer Heizung (23) der Vorrichtung (1) hin in einen Tank (19) für das flüssige Additiv (26) ausbildet und der Förderweg (2) weiter mindestens einen zweiten Abschnitt (27) aufweist, in dem eine einfriersensible Komponente (28) angeordnet ist, wobei die Vorrichtung zur Durchführung eines Verfahrens nach einem der vorhergehenden Patentansprüche eingerichtet ist,
**dadurch gekennzeichnet, dass**:
der erste Abschnitt (3) eine Mantelfläche (24) um die Heizung (23) herum ausbildet.

## Claims

1. Method for operating a device (1) for providing a liquid additive (26), the device (1) comprising a structural unit with a housing (21) that is inserted in a tank (19) for liquid additive, comprising a feeding path (2) along which the liquid additive (26) is fed, the feeding path (2) extending from an intake port (20) on the housing (21) with a feeding direction towards an exhaust treatment device (11) and having at least one first portion (3), which forms a heat conducting section (25) from a heater (23) of the device (1) into the tank (19) for the liquid additive (26), and the feeding path (2) also having at least one second portion (27), in which a component susceptible to freezing (28) is arranged, comprising at least the following steps:
a) feeding liquid additive (26) along the feeding path (2) of the device (1);
b) stopping the feeding of liquid additive (26);
c) partially draining the feeding path (2), liquid additive (26) remaining in the at least one first portion (3) of the feeding path (2) while the at least one second portion (27) is being drained,
**characterized in that**:
the first portion (3) forms an enclosing area (24) around the heater (23).

2. Method according to Patent Claim 1, wherein the feeding of the liquid additive (26) along the feeding path (2) in step a) takes place with a feeding direction (5), and the draining in step c) takes place at least predominantly counter to the feeding direction (5).

3. Method according to Patent Claim 2, wherein a feeding direction of a pump (6) for the feeding of the liquid additive (26) is reversed for the draining of the feeding path according to step c).

4. Method according to one of the preceding patent claims, wherein a filter (4) for filtering the liquid additive (26) is arranged in the first portion (3).

5. Method according to one of the preceding patent claims, wherein a pump (6) is operated for a predetermined time interval for the partial draining of the feeding path (2) in step c), the time interval being chosen such that liquid additive remains in the at least one first portion (3).

6. Method according to one of the preceding patent claims, wherein the partial draining of the feeding path in step c) is monitored by at least one sensor element (7), the sensor element (7) being arranged at a point (8) of the feeding path (2) and being set up for detecting whether there is liquid additive at the point (8), and the draining also being stopped as soon as there is no longer any liquid additive at the point (8).

7. Method according to Patent Claim 6, wherein the sensor element (7) is a pressure sensor (9) and the pressure measured by the pressure sensor (9) changes in dependence on the degree of filling of the feeding path (2).

8. Method according to one of the preceding patent claims, wherein a pump (6) is used for the partial draining of the feeding path (2) in step c), an operating parameter changing in dependence on a degree of filling of the feeding path (2) with liquid additive and draining operation of the pump (6) being stopped when a predetermined value of the operating parameter is reached.

9. Method according to Patent Claim 8, wherein the pump (6) is set to a diagnostic mode at at least one predetermined point in time during the draining, the operating parameter that is dependent on the degree of filling of the feeding path (2) being determined during the diagnostic mode.

10. Method according to one of the preceding patent claims, wherein, for the partial draining of the feeding path (2) in step c), the feeding path (2) is first drained completely and the feeding path (2) is subsequently partially filled again with liquid additive, so that there is liquid additive in the at least one first portion (3).

11. Method according to one of the preceding patent claims, wherein the feeding path (2) has at least one siphon (29), the at least one first portion (3) being formed in the siphon (29).

12. Device (1) for providing a liquid additive (26), comprising a feeding path (2) along which liquid additive (26) is fed, the device (1) comprising a structural unit with a housing (21) that is inserted in a tank (19) for liquid additive, the feeding path (2) extending from an intake part (20) on the housing (21) with a feeding direction towards an exhaust treatment device (11) and having at least one first portion (3), which forms a heat conducting section (25) from a heater (23) of the device (1) into a tank (19) for the liquid additive (26), and the feeding path (2) also having at least one second portion (27), in which a component susceptible to freezing (28) is arranged, the device being set up for carrying out a method according to one of the preceding patent claims,
**characterized in that**:
the first portion (3) forms an enclosing area (24) around the heater (23).

## Revendications

1. Procédé pour faire fonctionner un dispositif (1) servant à fournir un additif liquide (26), dans lequel le dispositif (1) comprend une unité modulaire avec un boîtier (21), qui est introduite dans un réservoir (19) pour un additif liquide, avec un chemin de transport (2) le long duquel l'additif liquide (26) est transporté, dans lequel le chemin de transport (2) s'étend à partir d'un point d'aspiration (20) sur le boîtier (21) avec une direction de transport vers un dispositif de traitement de gaz d'échappement (11) et comporte au moins une première partie (3), qui forme une zone de conduction de chaleur (25) d'un chauffage (23) du dispositif (1) en direction du réservoir (19) pour l'additif liquide (26) et le chemin de transport (2) présente en outre au moins une deuxième partie (27), dans laquelle un composant sensible à la congélation (28) est disposé, présentant au moins les étapes suivantes:
a) transporter de l'additif liquide (26) le long du chemin de transport (2) du dispositif (1);
b) arrêter le transport d'additif liquide (26);
c) vider partiellement le chemin de transport (2), dans lequel il reste de l'additif liquide (26) dans ladite au moins une première partie (3) du chemin de transport (2), tandis que ladite au moins une deuxième partie (27) est vidée,
**caractérisé en ce que** la première partie (3) forme une face d'enveloppe (24) autour du chauffage (23).

2. Procédé selon la revendication 1, dans lequel on effectue le transport de l'additif liquide (26) le long du chemin de transport (2) à l'étape a) avec une direction de transport (5), et on effectue la vidange à l'étape c) au moins principalement à l'inverse de la direction de transport (5).

3. Procédé selon la revendication 2, dans lequel pour la vidange du chemin de transport selon l'étape c) on inverse une direction de transport d'une pompe (6) pour le transport de l'additif liquide (26).

4. Procédé selon l'une quelconque des revendications précédentes, dans lequel un filtre (4) est disposé dans la première partie (3) pour le filtrage de l'additif liquide (26).

5. Procédé selon l'une quelconque des revendications précédentes, dans lequel pour la vidange partielle du chemin de transport (2) à l'étape c), on fait fonctionner une pompe (6) pendant un laps de temps prédéterminé, dans lequel le laps de temps est choisi de telle manière qu'il reste de l'additif liquide dans ladite au moins une première partie (3).

6. Procédé selon l'une quelconque des revendications précédentes, dans lequel on surveille la vidange partielle du chemin de transport à l'étape c) avec un moins un élément de détecteur (7), dans lequel l'élément de détecteur (7) est disposé en un point (8) du chemin de transport (2) et est conçu de façon à détecter s'il se trouve de l'additif liquide au point (8), et en outre on arrête la vidange dès qu'il ne se trouve plus d'additif liquide au point (8).

7. Procédé selon la revendication 6, dans lequel l'élément de détecteur (7) est un capteur de pression (9) et la pression mesurée par le capteur de pression (9) se modifie en fonction du degré de remplissage du chemin de transport (2).

8. Procédé selon l'une quelconque des revendications précédentes, dans lequel pour la vidange partielle du chemin de transport (2) à l'étape c) on utilise une pompe (6), dans lequel un paramètre de fonctionnement se modifie en fonction d'un degré de remplissage du chemin de transport (2) avec de l'additif liquide et on arrête un fonctionnement de la pompe (6) pour la vidange lorsque l'on atteint une valeur prédéterminée du paramètre de fonctionnement.

9. Procédé selon la revendication 8, dans lequel on place la pompe (6) dans un mode de diagnostic pendant la vidange jusqu'à au moins un instant prédéterminé, dans lequel on détermine le paramètre de fonctionnement dépendant du degré de remplissage du chemin de transport (2) pendant le mode de diagnostic.

10. Procédé selon l'une quelconque des revendications précédentes, dans lequel pour la vidange partielle du chemin de transport (2) à l'étape c) on vide d'abord entièrement le chemin de transport (2) et on remplit ensuite de nouveau partiellement le chemin de transport (2) avec de l'additif liquide, de telle manière qu'il se trouve de l'additif liquide dans ladite au moins une première partie (3).

11. Procédé selon l'une quelconque des revendications précédentes, dans lequel le chemin de transport (2) présente au moins un siphon (29), dans lequel ladite au moins une première partie (3) est formée dans le siphon (29).

12. Dispositif (1) servant à fournir un additif liquide (26) avec un chemin de transport (2) le long duquel l'additif liquide (26) est transporté, dans lequel le dispositif (1) comprend une unité modulaire avec un boîtier (21), qui est introduite dans un réservoir (19) pour un additif liquide, dans lequel le chemin de transport (2) s'étend à partir d'un point d'aspiration (20) sur le boîtier (21) avec une direction de transport vers un dispositif de traitement de gaz d'échappement (11) et comporte au moins une première partie (3), qui forme une zone de conduction de chaleur (25) d'un chauffage (23) du dispositif (1) en direction d'un réservoir (19) pour l'additif liquide (26) et le chemin de transport (2) présente en outre au moins une deuxième partie (27), dans laquelle un composant sensible à la congélation (28) est disposé, dans lequel le dispositif est conçu pour la mise en oeuvre d'un procédé selon l'une quelconque des revendications précédentes,
**caractérisé en ce que** la première partie (3) forme une face d'enveloppe (24) autour du chauffage (23).
